# EUROPÄISCHE PATENTSCHRIFT

(11) **EP 1 797 983 B1**
(45) Veröffentlichungstag und Bekanntmachung des Hinweises auf die Patenterteilung: **18.03.2009**
(21) Anmeldenummer: 06025846.4
(22) Anmeldetag: 13.12.2006
(51) Int. Cl.: B23B 31/117, B23P 11/02

(54) **Schrumpffutter mit exzentrischer Positionierung**
Shrink fit chuck with eccentric positioning
Mandrin à ajustement fretté avec positionnement excentrique

(30) Priorität: 16.12.2005 DE 202005019707 U; 09.03.2006 DE 102006011007
(43) Veröffentlichungstag der Anmeldung: 20.06.2007
(73) Patentinhaber: Gühring OHG, 72458 Albstadt (DE)
(72) Erfinder: Gruber, Jochen, 72488 Sigmaringen/Laiz (DE)
(74) Vertreter: Winter, Brandl, Fürniss, Hübner Röss, Kaiser, Polte Partnerschaft Patent- und Rechtsanwaltskanzlei

(56) Entgegenhaltungen:
- EP-A1- 0 830 917
- DE-A1- 10 121 743
- DE-A1- 10 138 107

## Beschreibung

Die Erfindung betrifft eine Spanneinrichtung zur Befestigung eines Werkzeugs an einer Werkzeugmaschine, insbesondere in der Form einer Schrumpffutter-Werkzeugaufnahme für zylindrische, insbesondere kreiszylindrische Werkzeuge, gemäß dem Oberbegriff des Anspruchs 1, sowie auf eine Spannvorrichtung zum Spannen von Werkzeugen mittels des Schrumpffutters.

In der spanabhebenden Metallverarbeitung wird heute hauptsächlich auf Werkzeugmaschinen mit einem hohen Automatisierungsgrad gefertigt. Einen wesentlichen Einfluss auf die Qualität von Werkstücken sowie auf die Effizienz der Fertigungsabläufe haben dabei die eingesetzten Spann- und Greifsysteme, in welche die Einsatzwerkzeuge eingespannt sind und die ihrerseits wiederum in entsprechenden Aufnahmen der Werkzeugmaschine, beispielsweise genormten Zylinderschaftaufnahmen oder HSK-(Hohlschaftkegel)-Zangen, gehalten sind.

Mit Schrumpffutter-Werkzeugaufnahmen lassen sich gegenüber herkömmlichen Spannmitteln wie beispielsweise Dreibackenfuttern oder Dehnfuttern eine erhöhte Steifigkeit der Werkzeug/Werkzeugaufnahme-Einheit und ein erhöhtes übertragbares Drehmoment erzielen. Somit können sowohl Oberflächenverbesserungen am Werkstück, eine Erhöhung der Fertigungspräzision und Standzeiterhöhungen des Werkzeugs erreicht werden, als auch Fertigungsverfahren mit extrem hohen Drehzahlen und Vorschubgeschwindigkeiten realisiert werden, wie etwa beim sogenannten High-Speed-Cutting (HSC).

Marktübliche Geräte zum Einspannen von Einsatzwerkzeugen in Schrumpffutter sehen eine Heizung vor, beispielsweise mit Heissluft oder unter Zuhilfenahme einer Induktionsspule, mittels der eine Werkzeugaufnahme aufgeweitet wird, so dass das (noch kalte) Werkzeug in den Schacht der Werkzeugaufnahme eingebracht werden kann. Nach dem Abkühlen und dem damit einhergehenden Einschrumpfen der Werkzeug-Aufnahme ist das Werkzeug fest eingespannt. Auf diese Weise werden niedrige Paarungstoleranzen der Paarung Werkzeug - Werkzeugaufnahme und ein entsprechend fester Sitz des Werkzeugs erreicht.

Derartige gattungsgemäße Spanneinrichtungen, insbesondere Schrumpffutter, und Spannvorrichtungen, die auch als Schrumpfgeräte bezeichnet werden, sind z.B. in den Dokumenten DE 101 21 743 A1, DE 101 38 107 A1 und EP 830917 B1 beschrieben.

Damit das noch kalte Werkzeug sauber an das Schrumpffutter angesetzt werden kann, hat der Werkzeugschaft in der Regel eine Anfasung. Zum Erleichtern des Einsetzvorgangs hat die zur Aufnahme des Werkzeugschafts vorgesehene Ausnehmung des Schrumpffutters gemäß EP 830917 B1 einen Einführabschnitt, mit dem der Werkzeugschaft im noch kalten Zustand der Werkzeugaufnahme vorpositioniert werden kann.

Im bekannten Fall ist die Anordnung so getroffen, dass der Einführabschnitt das Werkzeug so lange hält, bis die Temperatur des Schrumpfabschnitts bzw. des Schrumpffutters ausreichend hoch geworden und damit die Innenausnehmung in der Weite bzw. im Durchmesser so weit angewachsen ist, dass sie das Außenmaß des Schafts erreicht und sogar übersteigt. Wenn das Werkzeug und damit das Schrumpffutter vertikal im Schrumpfgerät ausgerichtet ist, gleitet das Werkzeug unter der Einwirkung der Schwerkraft in das Schrumpffutter.

Es hat sich allerdings gezeigt, dass diese automatische, unkontrollierte Bewegung des Werkzeugs unerwünscht sein kann, beispielsweise dann, wenn es darauf ankommt, die Werkzeugschneiden und damit den Werkzeugschaft in ganz exakter Lagezuordnung zum Spannfutter zu positionieren, damit der automatisierte Einsatz des Werkzeugs vereinfacht ist.

Der Erfindung liegt daher die Aufgabe zugrunde, eine Spanneinrichtung zur Befestigung eines Werkzeugs an einer Werkzeugmaschine, insbesondere in der Form einer Schrumpffutter-Werkzeugaufnahme für zylindrische, insbesondere kreiszylindrische Werkzeuge, zu schaffen, mit der nach wie vor eine einfache Handhabung des Werkzeugs vor dem Einschrumpfen sichergestellt ist, gleichzeitig aber mehr Kontrolle für den eigentlichen Einführvorgang des Werkzeugs in die Innenausnehmung des Schrumpffutters verbleibt. Eine weitere Aufgabe besteht in der Schaffung eines Schrumpfgeräts, mit dem eine verbesserte Handhabung beim Einschrumpfvorgang des Werkzeugs möglich ist.

Diese Aufgabe wird hinsichtlich der Spanneinrichtung durch die Merkmale des Anspruchs 1 und hinsichtlich des Schrumpfgeräts durch die Merkmale des Anspruchs 6 gelöst.

Erfindungsgemäß wird eine Schrumpffutter-Werkzeugaufnahme für zylindrische, insbesondere kreiszylindrische Schaftwerkzeuge, geschaffen, mit einem Befestigungsschaft für den Anschluss an eine Werkzeugmaschine und mit einem thermisch aufweitbaren Schrumpfabschnitt, der eine Innenausnehmung zur vorzugsweise zentrierten Aufnahme eines Werkzeugschafts und einen dieser über eine Stufe vorgeschalteten, eine geringe axiale Erstreckung aufweisenden Vorpositionierungsabschnitt aufweist. Die Besonderheit besteht darin, dass der Vorpositionierungsabschnitt exzentrisch zur Innenausnehmung liegt. Dadurch ergibt sich der Vorteil, dass das Werkzeug, vorzugsweise ein kreiszylindrisches Schaftwerkzeug, nach wie vor einfach vorpositioniert werden kann. Es stützt sich zuverlässig während des Erwärmungsvorgangs des Schrumpffutters auf der Stufe ab.

Wenn allerdings die Aufweitung des Innenausnehmung weit genug fortgeschritten ist, fällt das Werkzeug nicht automatisch und unkontrolliert nach unten, sondern kippt zunächst in eine Richtung, die von der Position der größten Breite der Stufe weg gerichtet ist, so dass eine Art geringes Verkanten eintritt. Das Werkzeug kann in diesem Zustand entweder von Hand erfasst oder von einer Manipulationseinrichtung, wie z.B. einem Roboter oder einer Druckplatte mit integriertem Messarm kontrolliert in die Innenausnehmung hinein bewegt werden, bis es die vorbestimmte Endposition erreicht hat. Dabei ergibt sich der zusätzliche Vorteil, dass im Einsatz des Werkzeugs - selbst unter erschwerten Bedingungen, wie z.B. beim Zerspanen von Gusswerkstoffen - im Bereich des Vorpositionierungsabschnitts keine ausreichend große Volumina verbleiben, die einer Verschmutzungsgefahr unterliegen. Denn dieser im Querschnitt sichelförmige Raum hat bei einer Axiallänge von einigen mm lediglich eine Radialerstrekkung im Bereich einiger Hunderstel Millimeter. Verschmutzungsbedingte Probleme beim Lösen und Wiederherstellen der Schrumpfverbindung treten somit nicht auf. Ein besonderer Vorteil der erfindungsgemäßen Anordnung ergibt sich insbesondere dann, wenn Werkzeuge größeren Durchmessers, insbesondere VHM-Werkzeuge in das Futter eingesetzt werden sollen. Diese Werkzeuge haben ein beträchtliches Gewicht, so dass bislang, d.h. mit einer herkömmlichen Schrumpffutter-Werkzeugaufnahme, von dem unter Schwerkraft automatisch nach unten gleitenden Werkzeug ein beträchtlicher Schlag auf ein Justierelement aufgebracht wurde. Dieser nachteilige Effekt wird erfindungsgemäß beseitigt.

Vorteilhafte Weiterbildungen sind Gegenstand der Unteransprüche.

Besonders günstige Verhältnisse ergeben sich dann, wenn der Vorpositionierungsabschnitt und die Innenausnehmung jeweis von Kreiszylindermantelflächen gebildet sind.

Wenn die Stufe über eine Anfasung abgeschrägt ist, kann das Eindrücken bzw. Einschieben des Werkzeugs in die vorgewärmte Innenausnehmung erleichtert werden.

Ein vorteilhaftes Schrumpfgerät zum Spannen von Werkzeugen in einer erfindungsgemäßen Schrumpffutter-Werkzeugaufnahme ist Gegenstand des Anspruchs 6. Es hat eine Heizeinrichtung zur Erwärmung eines im wesentlichen vertikal ausgerichteten Schrumpffutters bei vorpositioniertem Werkzeug und eine oberhalb des Schrumpffutters positionierbare Handhabungseinrichtung für das Werkzeug, wobei die Besonderheit darin besteht, dass die Handhabungseinrichtung, wie z.B. eine Anschlagplatte und/oder eine gegebenenfalls mit einer Greifeinrichtung ausgestattete Zentrierhilfe mit dem Werkzeug derart zusammenwirkt, dass eine beim Erwärmungsvorgang des Schrumpffutters einsetzende Kippbewegung des Werkzeugs erlaubt wird.

Vorteilhafterweise hat das Schrumpfgerät zusätzlich eine Einrichtung zur maßgenauen Axialverschiebung des Werkzeugs in die Innenausnehmung des erwärmten Schrumpffutters. Bei dieser Einrichtung kann es sich um eine Stelleinrichtung handeln, die in der eigenen älteren und offengelegten Patentanmeldung DE 101 38 107 A1 beschrieben ist, deren Offenbarung ausdrücklich in die vorliegende Anmeldung einbezogen wird.

Nachstehend werden Ausführungsbeispiele der Erfindung näher beschrieben. Es zeigen:
Figur 1 eine schematische Ansicht eines Schrumpffutters;
Figur 2 eine schematische Darstellung der Stirnseite des noch kalten Schrumpffutter mit angesetztem Werkzeug;
Figur 3 eine der Figur 2 entsprechende Darstellung der Anordnung aus Schrumpffutter und Werkzeug, wenn das Schrumpffutter erwärmt ist; und
Figur 4 und 5 Stirnansichten von Varianten des Schrumpffutters.

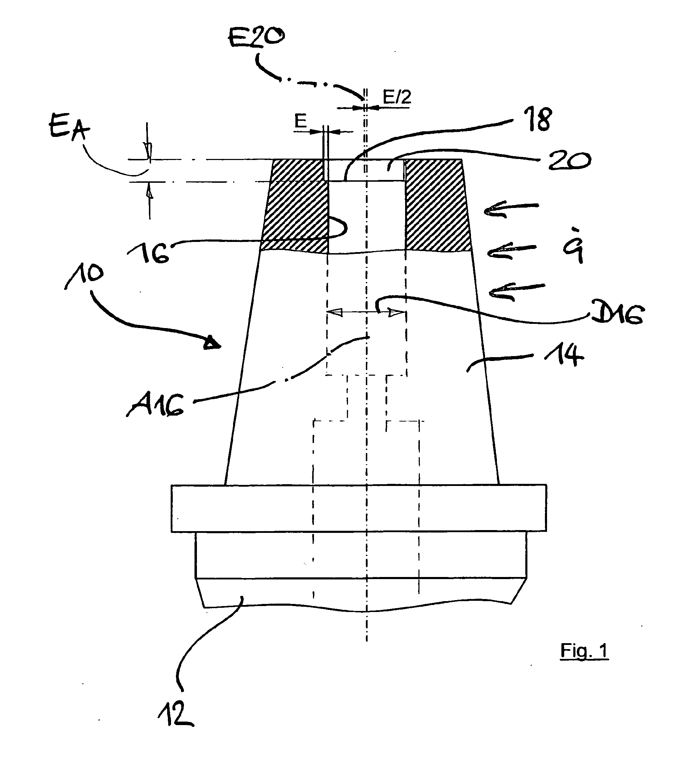

In Figur 1 ist mit dem Bezugszeichen 10 eine vertikal in einem nicht näher dargestellten Schrumpfgerät ausgerichtete Schrumpffutter-Werkzeugaufnahme für zylindrische, insbesondere kreiszylindrische Schaftwerkzeuge bezeichnet. Sie hat einen Befestigungsschaft 12, beispielsweise in Form eines nicht näher gezeigten Hohlschaftkegels, über den der Anschluss an eine Werkzeugmaschine erfolgt. Mit 14 ist ein thermisch aufweitbarer Schrumpfabschnitt bezeichnet, der eine auf Passung mit dem Außendurchmesser des einzusetzenden Werkzeugs gefertigte, vorzugsweise geschliffene Innenausnehmung 16 zur zentrierten Aufnahme eines nicht näher dargestellten Werkzeugschafts hat. Die Innenausnehmung 16 ist von einer Kreiszylindermantelfläche gebildet. Die Achse der Innenausnehmung 16 ist mit A16 bezeichnet.

Diese Innenausnehmung 16 hat einen Durchmesser D16, der an den Außendurchmesser der Werkzeugs derart angepasst ist, dass ein Schrumpfsitz gewährleistet wird. Der Innenausnehmung 16 ist über eine Stufe 18 ein Vorpositionierungsabschnitt 20 vorgeschaltet, der eine geringe axiale Erstreckung EA beispielsweise von einigen mm hat.

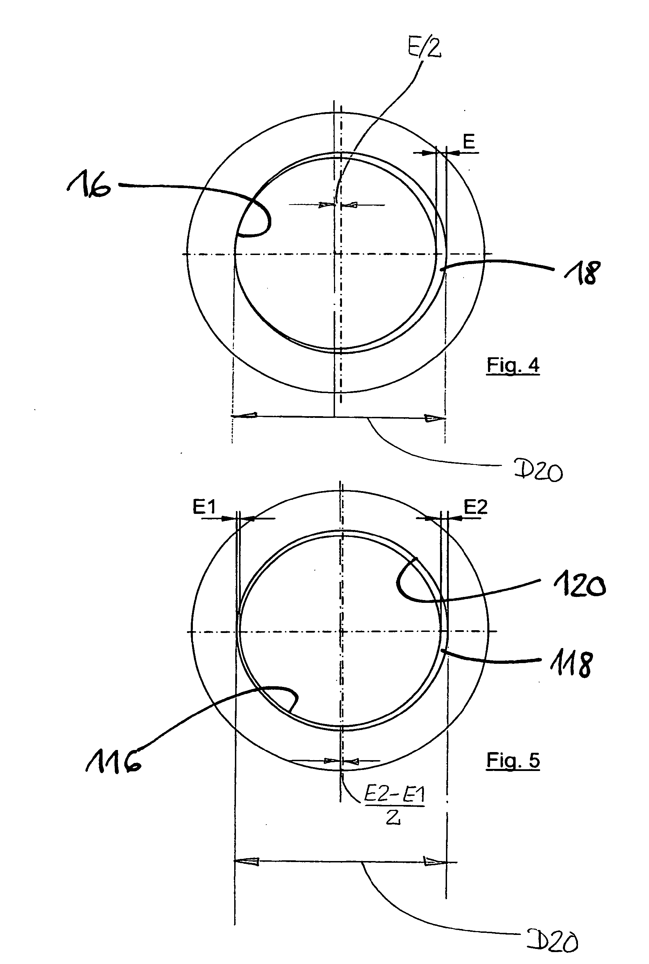

Der Vorpositionierungsabschnitt 20 ist ebenfalls von einer Kreiszylindermantelfläche gebildet, allerdings mit einer Achse E20, die zur Achse E16 um das Exzentrizitätsmaß E/2 parallel versetzt liegt. Der Innendurchmesser D20 (vgl. Figur 4 und 5) des Vorpositionierungsabschnitts 20 ist geringfügig größer als der Innendurchmesser 16 der Innenausnehmung 16 und zwar derart, dass das kalte Werkzeug mit Spielpassung in das noch kalte Schrumpffutter 10 eingesetzt werden kann.

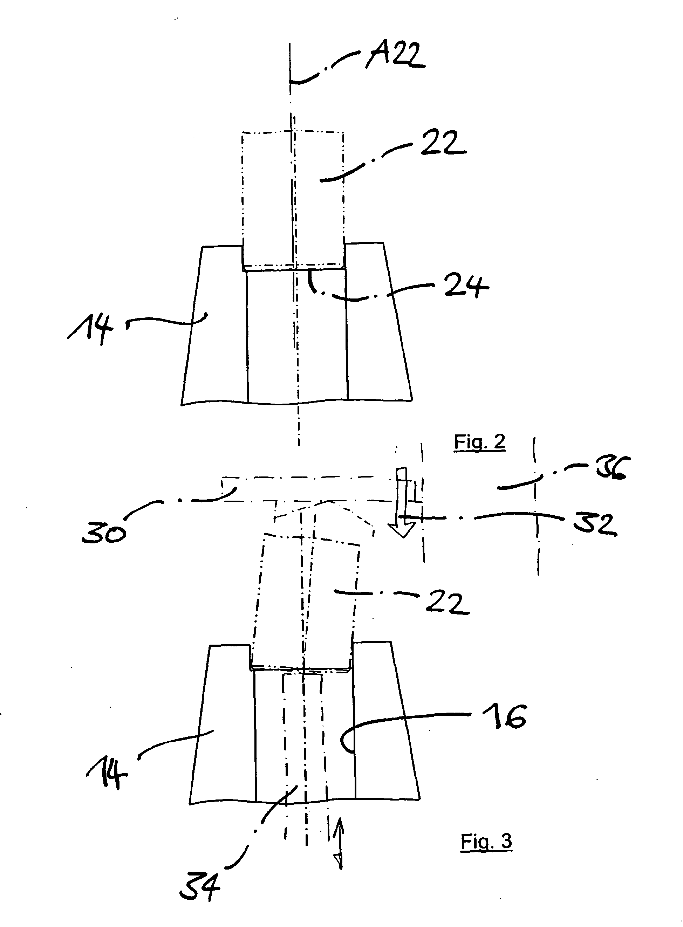

Dieser Zustand ist in Figur 2 angedeutet. Das Werkzeug bzw. der Werkzeugschaft ist mit 22 bezeichnet. Er sitzt in dem exzentrischen Vorpositionierungsabschnitt 20, so dass er mit seiner vorzugsweise angefasten Stirnseite 24 an der Stufe 18 aufliegt. Die Stufe hat bedingt durch die Exzentrizität der Flächen 16 und 20 eine Sichelform (vgl. Figur 4), deren größte Breite der doppelten Exzentrizität, also E entspricht. Die Achse A22 des Werkzeugschafts ist um das Maß E/2 zur Achse A16 der Innenausnehmung 16 versetzt.

Die Exzentrizität ist in den Figuren selbstverständlich übertrieben dargestellt. Sie liegt für gängige Werkzeugschaftdurchmesser in der Größenordnung von nur einigen 1/100 steln Millimetern. Dementsprechend klein ist auch die Breite der Stufe 18.

Die Stufe 18 kann über eine nicht näher dargestellte Anfasung zusätzlich abgeschrägt sein.

Wenn nun im Schrumpfgerät eine Erwärmung des Schrumpffutters 14 erfolgt, dehnt sich die Innenausnehmung 16 und der Vorpositionierungsabschnitt 20 aus. Durch die Auflage des Werkzeugschafts an der sichelförmigen Stufe 18 gleitet aber das Werkzeug nicht axial in die Innenausnehmung 16, sondern "kippt" seitlich geringfügig weg, wie dies in Figur 3 schematisch und übertrieben dargestellt ist, und zwar in eine Richtung, die von der größten Erstreckung der Stufe (mit dem Maß E) weg gerichtet ist.

In diesem Moment kann eine oberhalb des Schrumpffutters 14 positionierbare, in Figur 3 strichpunktiert angedeutete Handhabungseinrichtung 30 in Form einer Messarm-Anschlagplatte für das Werkzeug 22 in Funktion treten und das Werkzeug 22 - wie mit dem Pfeil 32 angedeutet - kontrolliert nach unten in die vorgeweitete Innenausnehmung 16 drücken bzw. bewegen, wobei eine durch eine Messeinrichtung überwachte Abstützung auf einem antreibbaren Stellkörper 34 erfolgen kann, wie dies beispielsweise in der eigenen älteren und offengelegten Patentanmeldung DE 101 38 107 A1 beschrieben ist, deren Offenbarung ausdrücklich in die vorliegende Anmeldung einbezogen wird.

Alternativ kann das Werkzeug auch allein von Hand manipuliert werden. Es hat sich z. B. gezeigt, dass ein leichtes Antippen des Werkzeugs und der Erwärmung des Schrumpffutters genügt, damit das Werkzeug in die Bohrung 16 gleitet.

Es kann auch eine Zentrierhilfe an einem Ständer 36 des Schrumpfgeräts vorgesehen sein, wobei in diesem Fall dafür gesorgt sein muß, dass die geringfügige seitliche Kippbewegung nicht behindert wird.

Es entsteht auf diese Weise ein Schrumpfgerät mit einer Einrichtung zur maßgenauen Axialverschiebung des Werkzeugs 22 in die Innenausnehmung 16 des erwärmten Schrumpffutters 14, wobei die Komponenten geschont werden, auch wenn schwere Werkzeuge, wie z. B. VHM-Werkzeuge größeren Durchmessers gespannt werden müssen.

Figur 4 zeigt in vergrößertem Maßstab die Stirnansicht des Schrumpffutters 10 der Figuren 1 bis 3. Man erkennt die sichelförmige Stufe 18, die auf der der größten Breite E abgewandten Seite stufenlos in die Innenoberfläche der Innenausnehmung 16 übergeht. Die Darstellung ist nicht maßstabgetreu, sondern sie stellt die sichelförmige Stufe weit übertrieben dar. Die größte radiale Weite des sichelförmigen Volumens, welches nach dem Einsetzen des Werkzeugs in das Schrumpffutter zwischen der Innenwand der Ausnehmung 16 und dem Schaft des Werkzeugs verbleibt, ist so klein, dass Schmutzansammlungen in diesem Volumen ausgeschossen bzw. gut beherrschbar sind, wodurch sich eine hohe Funktionssicherheit bei minimaler Wartung ergibt.

Eine Variante ist in Figur 5 gezeigt. Die Exzentrizität (E2-E1)/2 zwischen Innenausnehmung 116 des Schrumpfabschnitts und Vorpositionierungsabschnitt 120 ist in diesem Fall kleiner, so dass eine umlaufende Stufe 118 entsteht, deren Breite zwischen den Werten E1 und E2 variiert.

## Patentansprüche

1. Schrumpffutter-Werkzeugaufnahme für zylindrische, insbesondere kreiszylindrische Schaftwerkzeuge, mit einem Befestigungsschaft (12) für den Anschluss an eine Werkzeugmaschine und mit einem thermisch aufweitbaren Schrumpfabschnitt (14), der eine Innenausnehmung (16) zur vorzugsweise zentrierten Aufnahme eines Werkzeugschafts (22) und einen dieser über eine Stufe (18; 118) vorgeschalteten, eine geringe axiale Erstreckung (EA) aufweisenden Vorpositionierungsabschnitt (20; 120) aufweist, **dadurch gekennzeichnet, dass** der Vorpositionierungsabschnitt (20; 120) exzentrisch (E/2; (E2-E1)/2) zur Innenausnehmung (16; 116) liegt.

2. Schrumpffutter-Werkzeugaufnahme nach Anspruch 1, **dadurch gekennzeichnet, dass** der Vorpositionierungsabschnitt (20; 120) von einer Kreiszylindermantelfläche gebildet ist.

3. Schrumpffutter-Werkzeugaufnahme nach Anspruch 1 oder 2, **dadurch gekennzeichnet, dass** die Innenausnehmung (16; 116)von einer Kreiszylindermantelfläche gebildet ist.

4. Schrumpffutter-Werkzeugaufnahme nach einem der Ansprü-che 1 bis 3, **dadurch gekennzeichnet, dass** die Exzentrizität (E/2) im wesentlichen der halben Differenz ((D20-D16)/2) zwischen den Innendurchmessern des Vorpositionierungsabschnitts (20) und der Innenausnehmung (16) entspricht.

5. Schrumpffutter-Werkzeugaufnahme nach einem der Ansprüche 1 bis 4, **dadurch gekennzeichnet, dass** die Stufe (18) über eine Anfasung abgeschrägt ist.

6. Schrumpfgerät zum Spannen von Werkzeugen, mit einer Schrumpffutter-Werkzeugaufnahme nach einem der Ansprüche 1 bis 5, mit einer Heizeinrichtung zur Erwärmung eines im wesentlichen vertikal ausgerichteten Schrumpffutters (10) bei vorpositioniertem Werkzeug (22) und mit einer oberhalb des Schrumpffutters (10) positionierbaren Handhabungseinrichtung (30) für das Werkzeug (22), **dadurch gekennzeichnet, dass** die Handhabungseinrichtung, wie z.B. eine Anschlagplatte (30) oder eine Zentrierhilfe mit dem Werkzeug (22) derart zusammenwirkt, dass eine beim Erwärmungsvorgang des Schrumpffutters (10) einsetzende Kippbewegung des Werkzeugs (22) erlaubt wird.

7. Schrumpfgerät nach Anspruch 6, **gekennzeichnet durch** eine Einrichtung (30, 34) zur maßgenauen Axialverschiebung des Werkzeugs (22) in die Innenausnehmung (16) des erwärmten Schrumpffutters (10).

## Claims

1. Shrink-fit chuck tool holder for cylindrical, in particular circular cylindrical shank tools, comprising a fastening shaft (12) for establishing the connection to a machine tool and a thermally expandable shrink section (14) which has an inside recess (16) for the preferably centered accommodation of a tool shank (22) and a pre-positioning section (20; 120) which precedes the recess via a step (18; 118) and has a small axial extension (EA), **characterized in that** the pre-positioning section (20; 120) is disposed eccentrically (E/2; (E2-E1)/2) with respect to the inside recess (16; 116).

2. Shrink-fit chuck tool holder according to claim 1, **characterized in that** the pre-positioning section (20; 120) is formed by a circular cylindrical surface.

3. Shrink-fit chuck tool holder according to claim 1 or 2, **characterized in that** the inside recess (16; 116) is formed by a circular cylindrical surface.

4. Shrink-fit chuck tool holder according to any one of the claims 1 to 3, **characterized in that** the eccentricity (E2) substantially corresponds to half of the difference ((D20-D16)/2) between the inside diameters of the pre-positioning section (20) and the inside recess (16).

5. Shrink-fit chuck tool holder according to any one of the claims 1 to 4, **characterized in that** the step (18) is beveled with a chamfer.

6. A shrink apparatus for chucking tools in a shrink-fit chuck tool holder according to any one of the claims 1 to 5, comprising a heating device for heating a substantially vertically oriented shrink-fit chuck (10) with a pre-positioned tool (22), and a handling device (30) for the tool (22), which device can be can be positioned above the shrink-fit chuck (10), **characterized in that** the handling device, such as a stop plate (30) or a centering aid, interacts with the tool (22) such that it allows a tilting motion of the tool (22) during the heating process of the shrink-fit chuck (10).

7. A shrink apparatus according to claim 6, **characterized by** a device (39, 34) for the dimensionally accurate axial displacement of the tool (22) into the inside recess (16) of the heated shrink-fit chuck (10).

## Revendications

1. Raccordement d'outil pour mandrin à ajustement serré pour outils à queue cylindriques, en particulier de type cylindrique circulaire, comprenant une queue de fixation (12) pour le raccordement à une machine-outil et comprenant une section d'ajustement serré (14) pouvant être élargie thermiquement, qui comprend un évidement interne (16 ;116) destiné à loger de manière préférablement centrée une queue d'outil (22) et une section de prépositionnement (20 ; 120), laquelle est montée en aval de l'évidement au-dessus d'un gradin (18 ; 118) et comprend une légère extension axiale (EA), **caractérisé en ce que** la section de prépositionnement (20 ; 120) se situe de manière excentrique (E/2 ; (E2-E1)/2) par rapport à l'évidement interne (16 ; 116).

2. Raccordement d'outil pour mandrin à ajustement serré selon la revendication 1, **caractérisé en ce que** la section de prépositionnement (20 ; 120) est formée par une surface d'enveloppe cylindrique circulaire.

3. Raccordement d'outil pour mandrin à ajustement serré selon la revendication 1 ou 2, **caractérisé en ce que** l'évidement interne (16 ; 116) est formé par une surface d'enveloppe cylindrique circulaire.

4. Raccordement d'outil pour mandrin à ajustement serré selon l'une quelconque des revendications 1 à 3, **caractérisé en ce que** l'excentricité (E/2) correspond sensiblement à la moitié de la différence ((D20-D16)/2) entre les diamètres internes de la section de prépositionnement (20) et l'évidement interne (16).

5. Raccordement d'outil pour mandrin à ajustement serré selon l'une quelconque des revendications 1 à 4, **caractérisé en ce que** le gradin (18) est chanfreiné par chanfreinage.

6. Appareil d'ajustement serré destiné à serrer des outils, comprenant un raccordement d'outil pour mandrin à ajustement serré selon l'une quelconque des revendications 1 à 5, comprenant un dispositif de chauffage destiné à chauffer un mandrin à ajustement serré (10) orienté sensiblement verticalement lorsque l'outil (22) est prépositionné et comprenant un dispositif de manipulation (30) pour l'outil (22) pouvant être positionné au-dessus du mandrin à ajustement serré (10), **caractérisé en ce que** le dispositif de manipulation, comme par exemple une plaque de butée (30) ou un dispositif d'aide au centrage coopère avec l'outil (22) de telle sorte qu'un déplacement basculant de l'outil (22) mis en oeuvre lors du processus de chauffage du mandrin à ajustement serré (10) est permis.

7. Appareil à ajustement serré selon la revendication 6, **caractérisé par** un dispositif (30, 34) destiné à déplacer axialement et conformément aux mesures l'outil (22) dans l'évidement interne (16) du mandrin à ajustement serré (10) chauffé.
